# EUROPÄISCHE PATENTSCHRIFT

(11) **EP 1 055 599 B1**
(45) Veröffentlichungstag und Bekanntmachung des Hinweises auf die Patenterteilung: **19.12.2001**
(21) Anmeldenummer: 00110312.6
(22) Anmeldetag: 13.05.2000
(51) Int. Cl.: B64D 9/00

(54) **Vorrichtung zum Transport und zur Befestigung von mit Frachtcontainern oder mit Sitzen ausgerüsteten Paletten in einem Flugzeug**
Device for moving and locking pallets with containers or seats in an aircraft
Dispositif pour déplacer et fixer des palettes avec des conteneurs ou des sièges dans un avion

(30) Priorität: 21.05.1999 DE 19923489
(43) Veröffentlichungstag der Anmeldung: 29.11.2000
(73) Patentinhaber: EADS Airbus GmbH, 21129 Hamburg (DE)
(72) Erfinder: Kook, Manfred, Dipl.-Ing., 21109 Hamburg (DE); Schopenhauer, Wolfram, Dipl.-Ing., 21149 Hamburg (DE)
(74) Vertreter: Hansmann, Dierk, Dipl.-Ing.

(56) Entgegenhaltungen:
- EP-A- 0 507 257
- WO-A-97/31820
- DE-A- 4 210 703
- DE-A- 19 756 882
- GB-A- 858 596
- US-A- 3 282 229
- US-A- 3 480 239

## Beschreibung

Die Erfindung betrifft ein Flugzeug mit Frachtcontainern oder mit Sitzen ausgerüsteten Paletten und mit mindestens einer Vorrichtung zum Transport und zur Befestigung von den Paletten, die auf einem aus Längs- und Querträgern bestehenden Fußbodengerüst angeordnet sind unter Verwendung von am Fußbodengerüst an den Längsträgern befestigten Verriegelungselementen, die vorzugsweise in Flugzeuglängsrichtung verlaufen, wobei an den Paletten Verriegelungseinheiten zum Eingreifen in die Verriegelungselemente vorgesehen sind, die Verriegelungseinheiten jeweils mindestens ein Riegelelement und mindestens eine Transportrolle aufweisen und im Befestigungszustand das Riegelelement mit dem Verriegelungselement verriegelt und die Transportrolle in die Palette eingefahren ist sowie im Transportzustand das Riegelelement aus der Verriegelung gelöst und die Transportrolle mittels einer Hilfskraft aus der Palette ausgefahren ist.

Ein derartiges Flugzeug ist aus WO 97/31 820 bekannt, wobei als Verriegelungselemente Längsprofile eingesetzt werden, die das Aufnehmen von Verbundstücken ermöglichen. Diese Verbundstücke bilden die Verriegelungs-, Verankerungs- und Sicherungseinheiten. Die Längsträger als Verriegelungselemente müssen aber zunächst in jedes Flugzeug eingebaut werden, was einen erheblichen Aufwand zur Änderung der Flugzeugstruktur, insbesondere am Fußbodengerüst, mit sich bringt. Eine solche Lösung kann somit lediglich für kommende Flugzeugtypen, aber nicht für Umrüstprogramme von Serienflugzeugen Anwendung finden. Hier wäre eine Austausch wirtschaftlich unakzeptabel.

Zum Transport und zur Befestigung von Frachtcontainern oder von mit Sitzen ausgerüsteten Paletten sind weiterhin beispielsweise Riegelelemente aus DE-PS 42 10 703 bekannt, die an in Flugzeuglängsrichtung verlaufende Sitzschienen lösbar befestigt sind und für umrüstbare Verkehrsflugzeuge vom Passagierbetrieb in den Frachtbetrieb geeignet sind. Derartige Riegelelemente - als Teil eines Frachtladesystems - sind über Verriegelungselemente in Sitzschienen festlegbar und weisen einen Riegelhaken auf, der als sogenannter YZ-Riegel Paletten oder Container in lateraler und vertikaler Richtung fixiert. Der Haken greift hierfür über entsprechende Vorsprünge am Frachtstück. Für die Bewegung des Frachtstückes sind Transportrollen in Rollenbahnen sowie Kugelmatten vorgesehen, die im Frachtladesystem integriert sind. Hierbei ist von Nachteil, daß der Flugzeugfußboden - der gemäß DE 42 10 703 mit einem Frachtladesystem versehen wird - auch mit aufgesetzten Rollenbahnen zu versehen ist und damit ein Verlust von Kabinenhöhe eintritt.
Eine weitere Vorrichtung zum Transport und zur Befestigung von Frachtcontainersystemen oder von mit Sitzen ausgerüsteten Paletten ist aus DE-OS 197 56 882 oder EP-OS 0 853 039 bekannt. Diese Lösung weist auf den Querträgern des Fußbodenrostes in Flugzeuglängsrichtung u-förmige Längsprofile auf, die Verriegelungselemente und Transportrollen aufnehmen. Einerseits können die an der Palette oder dem Frachtcontainersystem angeordneten Teile der Verriegelung über einen Adapter mit dem ortsfesten Längsprofil verbunden werden und somit die Palette arretieren. Zum Transport der Palette muß die Verriegelung gelöst werden und über die Transportrollen in dem als Rollenbahn anzusehenden u-förmigen Profil erfolgt das Verschieben der Palette oder der Frachtcontainer. Die u-förmigen Längsprofile sind auf dem Fußbodengerüst angeordnet. Es ist vorgesehen, die u-förmigen Profile in regelmäßigen Abständen mit Transportrollen auszustatten. Damit sind - ob benötigt oder nicht - Komponenten an Bord eines Flugzeuges, die zusätzliches Gewicht verursachen.

Der Erfindung liegt daher die Aufgabe zugrunde, für ein Flugzeug eine Vorrichtung der eingangs genannten Art zu schaffen, die die Nachteile des bekannten Standes der Technik verhindert und insbesondere eine Gewichtsersparnis realisiert sowie einen Verlust an Kabinenhöhe verhindert, was insbesondere im Unterflurbereich eines Flugzeuges von hoher Bedeutung ist.

Diese Aufgabe wird bei einem gattungsgemäßen Flugzeug mit den im Patentanspruch 1 genannten Maßnahmen gelöst.

Dabei ist insbesondere von Vorteil, daß die Kabine eine ausreichende Höhe für den Personentransport erreicht durch eine höhensparende erfindungsgemäße Anordnung. Eine Gewichtsersparnis ist ebenfalls realisiert, da unter anderem nur soviel Transportrollen an Bord eines Flugzeuges mitgenommen werden, wie auch zu transportierendes Gut vorhanden ist.

Weiterbildungen und vorteilhafte Ausgestaltungen sind in den Unteransprüchen 2 bis 5 angegeben.

Die Ausgestaltung gemäß Anspruch 2 ist aufgrund der strukturfesten Ablauffläche für die Transportrollen bei einer notwendigen Verschiebung der Palette von Vorteil.

Die Maßnahme gemäß des Anspruches 3 ermöglicht das Ein- und Ausfahren der Transportrolle entsprechend des Bedarfs unaufwendig und platzsparend.

Die Ausbildung gemäß Anspruch 4 erlaubt ein Verschieben der Paletten, ohne daß sich die Riegelelemente in den Sitzschienen verklemmen bzw. verhaken können.

Eine ebene Oberfläche der Palette ist mit der Maßnahme gemäß Anspruch 5 erreicht.

In der Zeichnung ist ein Ausführungsbeispiel der Erfindung dargestellt. Es wird nachstehend anhand der Figuren 1 bis 4 näher beschrieben. In den Figuren sind gleiche Bauteile mit gleichen Bezugszeichen versehen.

Es zeigt
- Fig. 1: einen Ausschnitt einer Transport - und Befestigungsvorrichtung im Fußbodenbereich eines erfindungsgemäßen Flugzeuges im Befestigungszustand,
- Fig. 2: einen Ausschnitt der Transport - und Befestigungsvorrichtung im Fußbodenbereich eines erfindungsgemäßen Flugzeuges im Transportzustand,
- Fig. 3: die Vorrichtung gemäß Fig. 1 in einer Schnittdarstellung in der Ansicht von der Seite und
- Fig. 4: die Vorrichtung gemäß Fig. 2 im Transportzustand in der Ansicht von der Seite.

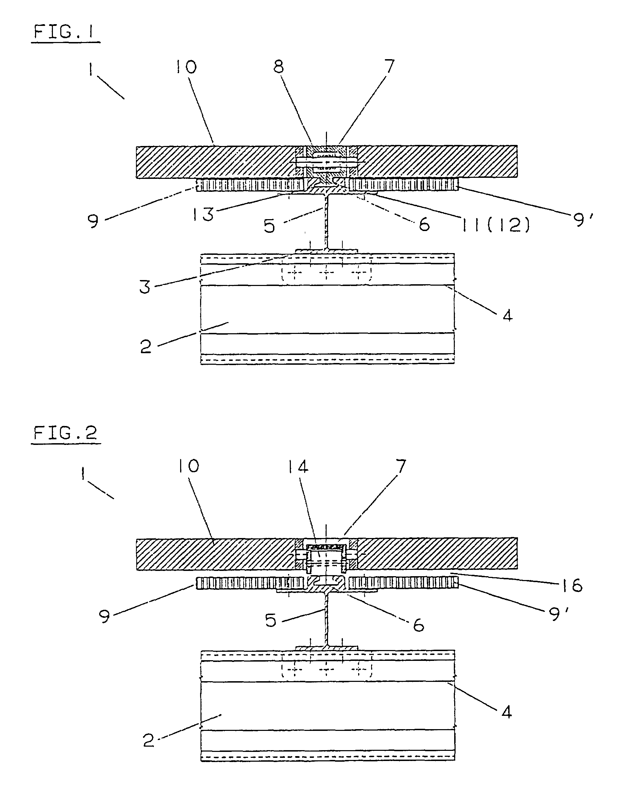

Die Fig. 1 zeigt einen Ausschnitt eines Fußbodenbereiches 1 eines Flugzeuges. Ein im Flugzeug vorhandenes Fußbodengerüst 2 besteht im wesentlichen aus Längs- und Querträgern 3 und 4. Auf den in Flugzeuglängsrichtung verlaufenden Längsträgern 3 sind Sitzschienen 5 angeordnet. Die Sitzschienen 5 weisen vorzugsweise eine T-Form auf, wobei auf der Oberseite der t-förmigen Sitzschienen 5 Schienenrasterelemente 6 vorgesehen sind. Die Schienenrasterelemente 6 liegen in einer Ebene mit Fußbodenplatten 9 und 9'. In das Schienenrasterelement 6 ist ein Riegelelement 8 einer Verriegelungseinheit 7 einrastbar. Die Verriegelungseinheit 7 ist Bestandteil einer Palette 10, die vorzugsweise mit Passagiersitzen (nicht gezeigt) ausgerüstet ist. Anstelle der Palette 10 kann auch der Bodenbereich eines LD-Frachtcontainers vorgesehen werden. Insbesondere für einen Unterflurbereich in einem Flugzeug ist es notwendig, das ein dort bisher angeordneter Frachtraum mit LD-Frachtcontainern flexibel auf eine Palette mit Passagiersitzen oder Teilen einer Passagierkabine umgerüstet werden kann. Bei einer solchen Umrüstung ist zur Verriegelung der entsprechenden Teile die Verriegelungseinheit 7 verwendbar. Vorzugsweise sind an einer Palette 10 mehrere solcher Verriegelungseinheiten 7 angeordnet. Die Funktionsweise dieser Einheit wird nachfolgend näher beschrieben.

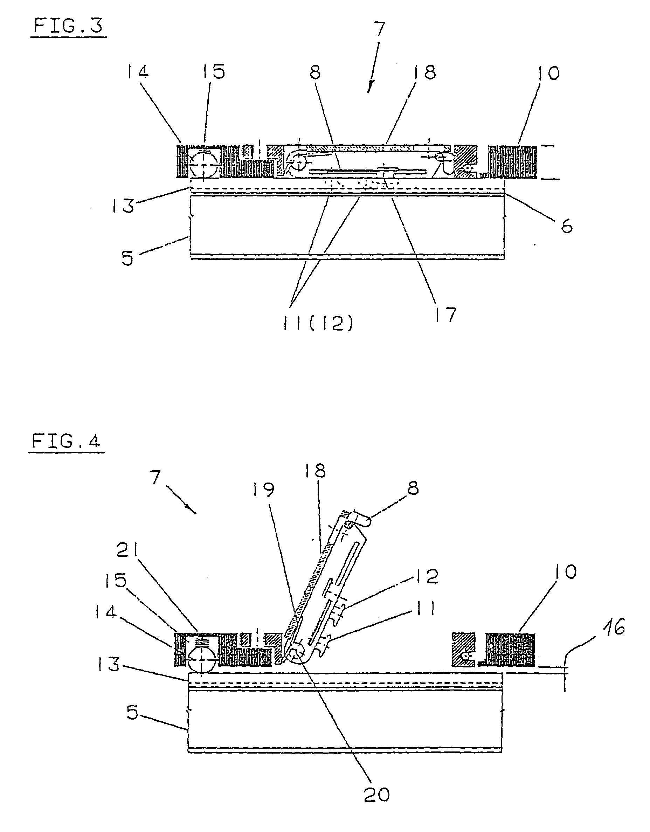

Ersichtlich in den Fign. 1 und 3 ist der Befestigungszustand, bei dem das Riegelelement 8 mit pilzförmigen Stollen 11 und 12 in das Schienenrasterelement 6 eingreift. Das Schienenrasterelement 6 weist eine T-förmige Nut 13 auf, die die Stollen 11 bzw. 12 aufnimmt. In der Nut 13 des Schienenrasterelementes 6 sind weiterhin Aufnahmeerweiterungen (nicht gezeigt) vorgesehen, die so ausgebildet sind, daß die pilzförmigen Stollen 11 und 12 eingeführt werden können und mit einer Verschiebung in Längsrichtung der Nut 13 die Verriegelung erreicht wird. Eine solche Verriegelung in an sich bekannte Sitzschienen ist unter anderem aus DE 42 10 703 bekannt.
Die Verriegelungseinheit 7 ist neben dem Riegelelement 8 mit mindestens einer Transportrolle 14 ausgestattet, wie in Fig. 3 ersichtlich ist. Die Transportrolle 14 ist an der jeweiligen Verriegelungseinheit 7 so angeordnet, daß sie in Flugzeuglängsrichtung auf der Oberseite der Sitzschienen 5 ablaufen kann. Zur. Aufnahme der Transportrolle 14 in der Palette 10 ist eine zur Unterseite des Palette offene Rollenaufnahme 15 vorgesehen.

Mit dem Einrasten der Stollen 11 und 12 in das Schienenrasterelement 6 ist die Palette 10 auf dem Fußbodengerüst 2 befestigt. Ein Scherstift 17 ist vorgesehen, um nach dem Verschieben der Stollen 11 und 12 die gesamte Einheit zu fixieren und in Flugzeuglängsrichtung festzuhalten. Die Oberseite des Riegelelementes 8 ist mit einer Abdeckplatte 18 versehen, die eine Ebene mit der Oberseite der Palette 10 bildet. So ist mit einer Anordnung von mehreren Paletten auf dem Fußbodengerüst 2 eine durchgängige Fußbodenfläche realisiert.

In der Fig. 2 ist ein Ausschnitt des Fußbodenbereiches 1 eines Flugzeuges mit der Palette 10 im Transportzustand gezeigt. Für den Transport der Palette 10 wird das Riegelelement 8 (siehe Fig. 4) entriegelt und die Transportrolle 14 wird mittels einer Hilfskraft, vorzugsweise Federkraft, soweit aus der Rollenaufnahme 15 herausgedrückt, daß zwischen den Fußbodenplatten 9, 9' und der Unterseite der Palette 10 ein Spalt 16 entsteht und die Palette 10 allein auf den Transportrollen 14 bewegt wird.

In den Fig. 4 ist die Verriegelungseinheit 7 in der Seitenansicht im Transportzustand gezeigt. Das Riegelelement 8 ist durch Verschieben entlang der Nut 13 entriegelbar, nachdem der Scherstift 17 aus einer Aufnahmeerweiterung der Nut 13 entfernt wurde. Dafür werden die Stollen 11 und 12 innerhalb der Nut 13 soweit verschoben, daß sie im Bereich von Aufnahmeerweiterungen wieder aus der Nut 13 herausgeführt werden können. Mit einem Federelement 19 wird das Riegelelement 8 um einen Anlenkpunkt 20 an der Palette 10 hochgeschwenkt. Damit ist für das Verschieben der Palette 10 ein störender Kontakt zwischen Einraststollen 11 und 12 sowie der Sitzschiene 5, der zu Behinderungen während des Verschiebens führen könnte, ausgeschlossen. Eine in der Rollenaufnahme 15 angeordnete Spiralfeder 21 drückt die Transportrolle 14 soweit aus der Rollenaufnahme 15 heraus, daß ein Spalt 16 zwischen Palette 10 und Fußboden 9 entsteht und für die Bewegung der Palette 10 auf dem Fußboden 9 ein Abrollen der Stirnfläche der Transportrolle 14 auf der Oberseite der Sitzschiene 5 möglich ist. Statt der Spiralfeder 21 sind auch andere Ausfahrmechanismen für das Herausfahren der Transportrolle 14 aus der Rollenaufnahme 15 möglich.

### Bezugszeichenliste

- 1 -: Fußbodenbereich in einem Flugzeug
- 2 -: Fußbodengerüst
- 3 -: Längsträger
- 4 -: Querträger
- 5 -: Sitzschienen
- 6 -: Schienenrasterelemente
- 7 -: Verriegelungseinheit
- 8 -: Riegelelememt
- 9, 9' -: Fußbodenplatten
- 10 -: Palette
- 11, 12 -: pilzförmige Stollen
- 13 -: T-förmige Nut
- 14 -: Transportrolle
- 15 -: Rollenaufnahme
- 16 -: Spalt
- 17 -: Scherstift (Shear pin)
- 18 -: Abdeckplatte
- 19 -: Federelememt
- 20 -: Anlenkpunkt
- 21 -: Spiralfeder

## Patentansprüche

1. Flugzeug mit Frachtcontainern oder mit Sitzen ausgerüsteten Paletten (10) und mit mindestens einer Vorrichtung zum Transport und zur Befestigung von den Paletten (10), die auf einem aus Längs- und Querträgern (3, 4) bestehenden Fußbodengerüst (2) angeordnet sind unter Verwendung von am Fußbodengerüst (2) an den Längsträgern (3) befestigten Verriegelungselementen, die vorzugsweise in Flugzeuglängsrichtung verlaufen, wobei an den Paletten (10) Verriegelungseinheiten (7) zum Eingreifen in die Verriegelungselemente vorgesehen sind, die Verriegelungseinheiten (7) jeweils mindestens ein Riegelelement (8) und mindestens eine Transportrolle (14) aufweisen und im Befestigungszustand das Riegelelement (8) mit dem Verriegelungselement verriegelt und die Transportrolle (14) in die Palette (10) eingefahren ist sowie im Transportzustand das Riegelelement (8) aus der Verriegelung gelöst und die Transportrolle (14) mittels einer Hilfskraft aus der Palette ausgefahren ist, **dadurch gekennzeichnet, daß** die Verriegelungselemente durch Sitzschienen (5) gebildet sind und das Riegelelement (8) der Verriegelungseinheit (7) im Befestigungszustand mit Einraststollen (11, 12) in an der Oberseite der Sitzschienen (5) angeordnete Schienenrasterelemente (6) eingreift und im Transportzustand die Einraststollen (11, 12) oberhalb und ohne Kontakt zu den Schienenrasterelementen angeordnet sind und sich die Transportrolle (14) in Rollkontakt zur oberen horizontalen Fläche der Sitzschiene (5) befindet.

2. Flugzeug nach Anspruch 1,
**dadurch gekennzeichnet, daß**
die Transportrolle (14) zylinderförmig ausgebildet ist, wobei die Stirnfläche im Transportzustand zur Bewegung der Palette auf der Oberseite der Sitzschiene (5) abläuft.

3. Flugzeug nach einem der Ansprüche 1 oder 2,
**dadurch gekennzeichnet, daß**
die Transportrolle (14) in einer an der Unterseite der Palette (10) angeordneten Rollenaufnahme (15) angeordnet ist und die Rollenaufnahme (15) eine Spiralfeder (21) aufweist, die die Hilfskraft zum Ausfahren der Transportrolle (14) in den Transportzustand erzeugt.

4. Flugzeug nach einem der Ansprüche 1 bis 3,
**dadurch gekennzeichnet, daß**
das Riegelelement (8) über einen Anlenkpunkt (20) schwenkbar an der Palette (10) angeordnet ist und mittels eines Federelementes (19) im Transportzustand hochschwenkbar ist.

5. Flugzeug nach einem der Ansprüche 1 bis 4,
**dadurch gekennzeichnet, daß**
das Riegelelement (8) eine Abdeckplatte (18) aufweist.

## Claims

1. An aircraft having freight containers or having pallets (10) fitted with seats, and having at least one device for transporting and securing the pallets (10), which are arranged on a floor structure (2) comprising longitudinal and transverse supports (3, 4) by means of locking elements which are secured to the longitudinal supports (3) of the floor structure (2) and preferably extend in the longitudinal direction of the aircraft, locking units (7) for engaging in the locking elements being provided on the pallets (10), the locking units (7) having in each case at least one bolt element (8) and at least one transport roller (14) and, in the securing condition, the bolt element (8) being locked with the locking element and the transport roller (14) being moved into the pallet (10) and, in the transporting condition, the bolt element (8) being released from the lock and the transport roller (14) being moved out of the pallet by means of an auxiliary force, **characterised in that** the locking elements are formed by seat rails (5) and, in the securing condition, the bolt element (8) of the locking unit (7) engages in rail grid elements (6) arranged on the upper side of the seat rails (5) by means of latching lugs (11, 12) and, in the transporting condition, the latching lugs (11, 12) are arranged above the rail grid elements without contacting these latter, and the transport roller (14) is located in rolling contact with the upper horizontal face of the seat rail (5).

2. An aircraft according to Claim 1, **characterised in that** the transport roller (14) is of a cylindrical construction, the end face moving along the upper side of the seat rail (5) in the transporting condition for the purpose of moving the pallet.

3. An aircraft according to one of Claims 1 or 2, **characterised in that** the transport roller (14) is arranged in a roller receiving means (15) arranged on the underside of the pallet (10), and the roller receiving means (15) has a helical spring (21) which generates the auxiliary force for moving the transport roller (14) out into the transporting condition.

4. An aircraft according to one of Claims 1 to 3, **characterised in that** the bolt element (8) is pivotally arranged on the pallet (10) by way of an articulation point (20), and may be pivoted upwards in the transporting condition by means of a spring element (19).

5. An aircraft according to one of Claims 1 to 4, **characterised in that** the bolt element (8) has a cover plate (18).

## Revendications

1. Avion avec conteneurs ou palettes (10) équipées de sièges et comprenant au moins un dispositif de déplacement et de fixation des palettes (10) disposées sur une structure de plancher (2) constituée de supports longitudinaux et transversaux (3, 4) avec l'aide des éléments de verrouillage fixés sur les supports longitudinaux (3) de l'ossature de plancher (2), ces éléments s'étendant de préférence dans le sens longitudinal de l'avion, des unités de verrouillage (7) destinées à s'engrener dans les éléments de verrouillage étant prévues sur les palettes (10), les unités de verrouillage (7) présentant chacune au moins un élément de verrou (8) et une roulette de déplacement (14), l'élément de verrou étant verrouillé, dans la phase de fixation, avec l'élément de verrouillage, la roulette de déplacement (14) ayant été guidée jusque dans la palette (10), l'élément de verrou (8) étant, dans la phase de déplacement, détaché du verrouillage, la roulette de déplacement (14) étant guidée hors de la palette grâce à une force auxiliaire, et **caractérisé en ce que** les éléments de verrouillage sont constitués par des rails de siège (5), l'élément de verrou (8) de l'unité de verrouillage (7) s'engrène, dans la phase de fixation et avec des crampons d'ancrage (11, 12), dans les éléments d'ancrage des sièges (6), les crampons d'ancrage (11, 12) sont, dans la phase de déplacement, disposés au dessus des éléments d'ancrage des sièges, sans les toucher et la roulette de déplacement (14) est en contact par galet avec la surface horizontale supérieure du rail de siège (5).

2. Avion selon la revendication 1,
**caractérisé en ce que**
la roulette de déplacement (14) est de forme cylindrique, la surface d'attaque s'étendant, dans la phase de déplacement, sur la face supérieure du rail de siège (5), pour permettre le mouvement de la palette.

3. Avion selon une des revendications 1 ou 2,
**caractérisé en ce que**
la roulette de déplacement (14) est disposée dans un logement pour roulettes (15) situé sur la face inférieure de la palette (10) et le logement pour roulettes (15) présente un ressort hélicoïdal (21) produisant la force auxiliaire nécessaire pour faire sortir la roulette de déplacement (14) dans la phase de déplacement.

4. Avion selon une des revendications 1 à 3,
**caractérisé en ce que**
l'élément de verrou (8) est disposé sur la palette de manière à pouvoir basculer via un point d'articulation, l'élément de verrou pouvant également basculer vers le haut dans la phase de déplacement, grâce à un élément à ressort (19).

5. Avion selon une des revendications 1 à 4
**caractérisé en ce que**
l'élément de verrou (8) dispose d'une plaque de recouvrement (18).
